# EUROPEAN PATENT SPECIFICATION

(11) **EP 4 043 335 B1**
(45) Date of publication and mention of the grant of the patent: **27.11.2024**
(21) Application number: 21157328.2
(22) Date of filing: 16.02.2021
(51) Int. Cl.: B63H 23/32, B63H 5/125

(54) **METHOD AND ARRANGEMENT FOR SEALING A PROPELLER SHAFT LOCATED UNDER WATER**
VERFAHREN UND ANORDNUNG ZUM ABDICHTEN EINER UNTER WASSER BEFINDLICHEN PROPELLERWELLE
PROCÉDÉ ET AGENCEMENT D'ÉTANCHÉITÉ D'UN ARBRE D'HÉLICE SITUÉ SOUS L'EAU

(43) Date of publication of application: 17.08.2022
(73) Proprietor: ABB Schweiz AG, 5400 Baden (CH)
(72) Inventor: Vähätalo, Veikko, 13500 Hämeenlinna (FI); Laine, Jukka, 03100 Nummela (FI); Maja, Otto, 04250 Kerava (FI); Niska, Toni, 01700 Vantaa (FI)
(74) Representative: Boco IP Oy Ab

(56) References cited:
- EP-A1- 1 213 221
- JP-A- 2003 127 988
- JP-A- H07 242 198
- US-A1- 2017 259 898

## Description

### Field of the invention

The invention relates to a method for sealing a propeller shaft located under water, as defined in the preamble of independent claim 1.

The invention also relates to an arrangement for sealing a propeller shaft located under water as defined in the preamble of independent claim 6.

Publication US 9,937,991 presents a sealing system, a method and a watercraft.

Publication US 2017/259898 A1 presents a sealing system, a method and a watercraft.

### Objective of the invention

The object of the invention is to provide an improved method and an improved arrangement for sealing a propeller shaft located under water.

### Short description of the invention

The method of the invention is characterized by the definitions of independent claim 1.

Preferred embodiments of the method are defined in the dependent claims 2 to 5.

The arrangement of the invention is correspondingly characterized by the definitions of independent claim 6.

Preferred embodiments of the arrangement are defined in the dependent claims 7 to 15.

### List of figures

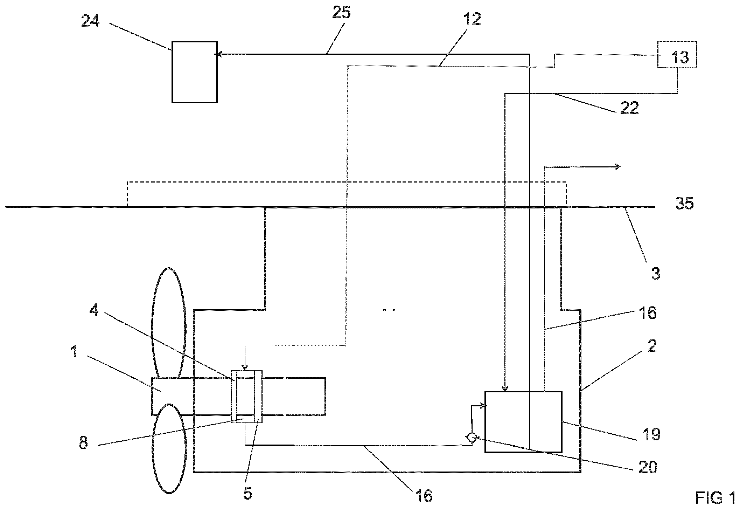

In the following the invention will described in more detail by referring to the figures, of which
Figure 1 is a schematic illustration of a first embodiment of the invention,
Figure 2 is a schematic illustration of a second embodiment of the invention,
Figure 3 is a schematic illustration of a third embodiment of the invention, and
Figure 4 is a schematic illustration of a fourth embodiment of the invention.

### Detailed description of the invention

First the method for sealing a propeller shaft 1 located under water and some embodiments and variants of the method will be described in greater detail.

In the method the propeller shaft 1 is arranged at a pod 2 that is suspended at a hull 3 of a ship and an air chamber 8 is provided circumferentially around the propeller shaft 1. The pod 2 can be pivotable suspended at the hull 3 of a ship.

The method comprises supplying compressed air from a compressed air source 13 in an air supply line 12 to the air chamber 8. Compressed air means in this context air, gas, or any mixture thereof.

The pressure in the air chamber 8 is provided circumferentially around the propeller shaft 1is preferably, but not necessarily, about 0.2 to about 0.6 bar higher than a pressure in a pod housing of the pod 2 such as in a pod housing limited by a shell structure (not marked with a reference number) of the pod 2.

The pressure of the compressed air supplied from the compressed air source 12 to the air supply line can be in the range of about 3 to about 10 bar.

The method comprises discharging compressed air from the air chamber 8 in an air return line 16 and out of the air return line 16

The method comprises collecting liquid present in the compressed air discharged from the air chamber 8 in an intermediate leakage tank 19 that is provided in the air return line 16 within a pod housing of the pod 2.

The method comprises closing the air return line 16 upstream of the intermediate leakage tank 19 and supplying compressed air to the intermediate leakage tank 19 effect flowing of liquid present in the intermediate leakage tank 19 in to a leakage tank 24. The leakage tank 24 can be arranged within the hull 3 of the ship or within the pod housing of the pod 2. The pressure of the compressed air that is supplied to the intermediate leakage tank 19 effect flowing of liquid present in the intermediate leakage tank 19 in to a leakage tank 24 is preferably, but not necessarily, in the range of about 1 bar to about 3 bar.

Said closing of the air return line 16 upstream of the intermediate leakage tank 19 can be done by closing a first valve 20 in the air return line 16 upstream of the intermediate leakage tank 19.

Said supplying of compressed air to the intermediate leakage tank 19 can be done by supplying compressed air to the intermediate leakage tank 19 in a connecting air line 22 that is provided as a separate line, which sole function is to supply compressed air to the intermediate leakage tank 19 effect flowing of liquid present in the intermediate leakage tank 19 in to the leakage tank 24.

Said closing of the air return line 16 upstream of the intermediate leakage tank 19 and said supplying of compressed air to the intermediate leakage tank 19 effect flowing of liquid present in the intermediate leakage tank 19 in to a leakage tank 24 is preferably, but not necessarily, performed in regular time intervals such as once every hour.

Alternatively can the connecting air line 22 be provided as a line that connects the air supply line 12, that supplies compressed air from the compressed air source 13 to the air chamber 8 provided circumferentially around the propeller shaft 1, and the air return line 16, that discharges compressed air from the air chamber 8 provided circumferentially around the propeller shaft 1, so that said supplying compressed air to the intermediate leakage tank 19 to effect flowing of liquid present in the intermediate leakage tank 19 in to a leakage tank 24, is performed so that compressed air fed from the compressed air source 12 flows first partly in the air supply line 12, thereafter flows in the connecting air line 22 and thereafter flows in the air return line 16 to the intermediate leakage tank 19 effect flowing of liquid present in the intermediate leakage tank 19 in to a leakage tank 24.

Liquid can flow from the intermediate leakage tank 19 to the leakage tank 24 in a connecting liquid line 25.

The method allows thus to drain the intermediate leakage tank 19 in a controller manner without a need to entering the pod 2, provided that the leakage tank 24 is provided within the hull 3 of the ship. Alternatively, the leakage tank 24 can be provided within the pod housing of the pod 2 in a location that is easily accessible. Draining of the intermediate leakage tank 19 is preferably, but not necessarily, made while supplying compressed air from the compressed air source 13 to the air chamber 8 in the air supply line 12 so that a sufficient pressure against water surrounding the pod is maintained in the air chamber 8 circumferentially surrounding the propeller shaft 8.

The method comprises preferably, but not necessarily, closing the air return line 16 downstream of the intermediate leakage tank 19 in connection with closing the air return line 16. Such closing of the air return line 16 downstream of the intermediate leakage tank 19 prevents fluid from being discharged out of the air return line 16 when supplying pressurized air in the connecting air line 22 to the intermediate leakage tank 19. Said closing of the air return line 16 downstream of the intermediate leakage tank 19 can be done by closing a second valve 17 in the air return line 16 downstream of the intermediate leakage tank 19. The method comprises preferably, but not necessarily arranging, the possible second valve 17 of the air return line 16 outside the pod 2 and within the hull 3 of the ship.

If the method comprises closing a second valve 17 in the air return line 16 downstream of the intermediate leakage tank 19 in connection with closing the first valve 20 in the air return line 16, the method comprises preferably, but not necessarily, supplying said compressed air in the connecting air line 22 to the intermediate leakage tank 19 by supplying compressed air to an upstream end 34 of the connecting air line 22 from the air supply line 12 supplying compressed air from the compressed air source 13 to the air chamber 8 provided circumferentially around the propeller shaft 1, and by supplying compressed air from a downstream end 35 of the connecting air line 22 into the air return line 16 at a point of the air return line 16 downstream of the intermediate leakage tank 19 and upstream of the second valve 17, and by supplying compressed air in the air return line 16 to the intermediate leakage tank 19 to effect said flowing of liquid present in the intermediate leakage tank 19 to the leakage tank 24 in the connecting liquid line 25.

If the method comprises closing the second valve 17 in the air return line 16 downstream of the intermediate leakage tank 19 in connection with closing the first valve 20 in the air return line 16, and if the method comprises supplying said compressed air in the connecting air line 22 to the intermediate leakage tank 19 by supplying compressed air to an upstream end 34 of the connecting air line 22 from the air supply line 12 supplying compressed air from the compressed air source 13 to the air chamber 8 provided circumferentially around the propeller shaft 1, and by supplying compressed air from a downstream end 35 of the connecting air line 22 into the air return line 16 at a point of the air return line 16 downstream of the intermediate leakage tank 19 and upstream of the second valve 17, and by supplying compressed air in the air return line 16 to the intermediate leakage tank 19 to effect said flowing of liquid present in the intermediate leakage tank 19 to the leakage tank 24 in the connecting liquid line 25, the method comprises preferably, but not necessarily, supplying compressed air from the compressed air source 13 to the air chamber 8 through a first pressure regulator 14 in the air supply line 12 and supplying compressed air in the connecting air line 22 through a second pressure regulator 23 configured to provide a higher pressure than the first pressure regulator 12 in the air supply line 12. In such embodiment of the method, the method comprises preferably, but not necessarily, arranging the first pressure regulator 14 of the air supply line 12 outside the pod 2 and within the hull 3 of the ship. In such embodiment of the method, the method comprises preferably, but not necessarily, arranging the second pressure regulator 23 in the connecting air line 22 outside the pod 2 and within the hull 3 of the ship.

If the method comprises closing the second valve 17 in the air return line 16 downstream of the intermediate leakage tank 19 in connection with closing the first valve 20 in the air return line 16, and if the method comprises supplying said compressed air in the connecting air line 22 to the intermediate leakage tank 19 by supplying compressed air to an upstream end 34 of the connecting air line 22 from the air supply line 12 supplying compressed air from the compressed air source 13 to the air chamber 8 provided circumferentially around the propeller shaft 1, and by supplying compressed air from a downstream end 35 of the connecting air line 22 into the air return line 16 at a point of the air return line 16 downstream of the intermediate leakage tank 19 and upstream of the second valve 17, and by supplying compressed air in the air return line 16 to the intermediate leakage tank 19 to effect said flowing of liquid present in the intermediate leakage tank 19 to the leakage tank 24 in the connecting liquid line 25, the method comprises preferably, but not necessarily, supplying compressed air from the compressed air source 13 to the air chamber 8 through a first pressure regulator 14 in the air supply line 12 and supplying compressed air in the connecting air line 22 through a second pressure regulator 23 configured to provide a higher pressure than the first pressure regulator 12 in the air supply line 12 and providing a check valve as the first valve 20 in the air return line 16 upstream of the intermediate leakage tank 19, wherein said closing of the first valve 20 in the return air line 16 upstream of the intermediate leakage tank 19 is effected by the difference between the pressure provided by the first pressure regulator 14 in the air supply line 12 and the pressure provided by the second pressure regulator 23 in the connecting air line 22. In such embodiment of the method, the method comprises preferably, but not necessarily, arranging the first pressure regulator 14 of the air supply line 12 outside the pod 2 and within the hull 3 of the ship. In such embodiment of the method, the method comprises preferably, but not necessarily, arranging the second pressure regulator 23 in the connecting air line 22 outside the pod 2 and within the hull 3 of the ship.

If the method comprises closing the second valve 17 in the air return line 16 downstream of the intermediate leakage tank 19 in connection with closing the first valve 20 in the air return line 16, and if the method comprises supplying said compressed air in the connecting air line 22 to the intermediate leakage tank 19 by supplying compressed air to an upstream end 34 of the connecting air line 22 from the air supply line 12 supplying compressed air from the compressed air source 13 to the air chamber 8 provided circumferentially around the propeller shaft 1, and by supplying compressed air from a downstream end 35 of the connecting air line 22 into the air return line 16 at a point of the air return line 16 downstream of the intermediate leakage tank 19 and upstream of the second valve 17, and by supplying compressed air in the air return line 16 to the intermediate leakage tank 19 to effect said flowing of liquid present in the intermediate leakage tank 19 to the leakage tank 24 in the connecting liquid line 25, the method comprises preferably, but not necessarily, monitoring the pressure in the air supply line 12 with a pressure sensor 33, and triggering an alarm and/or sending a signal from the pressure sensor 33 to a third valve 21 provided in the connecting air line 22 to close the third valve 21 provided in the connecting air line 22, if the pressure in the air supply line 12 exceeds a predetermined threshold value when the third valve 21 provided in the connecting air line 22 is open as an indication that the first valve 20provided in air return line 16 upstream of the intermediate leakage tank 19 leaks and so as to prevent the pressure in the air chamber 8 circumferentially provided around the propeller shaft 1 to raise too much and so as to prevent damage of the air chamber 8 .

The method comprises preferably, but not necessarily, discharging compressed air out of the air return line 16 through a throttle valve 18. In such case, the method comprises preferably, but not necessarily, arranging the throttle valve 18 of the air return line 16 outside the pod 2 and within the hull 3 of the ship.

The method comprises preferably, but not necessarily, monitoring the liquid level in the leakage tank 24 with a level monitor 27, and giving a signal to a drainage valve 28 arranged in fluid connection with the leakage tank 24 to effect opening of the drainage valve 28 if a predetermined threshold liquid level in the leakage tank 24 is exceeded.

The method comprises preferably, but not necessarily, providing a fourth valve 15 in the air supply line 12. In such case, the method comprises preferably, but not necessarily, arranging the fourth valve 15 of the air supply line 12 outside the pod 2 and within the hull 3 of the ship.

In the method, the air chamber 8 is preferably, but not necessarily, provided between a face seal 4 that is provided circumferentially around the propeller shaft 1 and a first seal ring 5 that is provided circumferentially around the propeller shaft 1. The face seal 4 is preferably, but not necessarily, configured separate the air chamber 8 from water surrounding the pod 2. In the method a lubricant chamber 7 can be provided between the first seal ring 5 that is provided circumferentially around the propeller shaft 1 and a second seal ring 6 that is provided circumferentially around the propeller shaft 1 so that the lubricant chamber 7 is provided circumferentially around the propeller shaft 1. If a lubricant chamber 7 is provided circumferentially around the propeller shaft 1, the method can comprise supplying lubricant in a lubricant supply line 9, preferably, but not necessarily, by means of gravity, from a lubricant tank 10 to the lubricant chamber 7 and supplying lubricant in a lubricant return line 11 from the lubricant chamber 7 to the lubricant tank 10. If the method comprises providing a lubricant tank 10 as described, the method can comprise monitoring the level of lubricant in the lubricant tank 10 by means of a first level sensor 31 and a second level sensor 32. If the method comprises providing a lubricant tank 10 and sensors 31 and 32, as described, the method can comprise providing the first level sensor 31 and the second level sensor 32 and the lubricant tank 10 within the pod housing of the pod 2. If such lubricant chamber 7 is provided circumferentially around the propeller shaft 1, the pressure in the lubricant chamber 7 is preferably, but not necessarily, 0.04 to 0.08 bar higher than a pressure in a pod housing of the pod 2 such as in a pod housing limited by a shell structure (not marked with a reference number) of the pod 2. If such lubricant chamber 7 is provided circumferentially around the propeller shaft 1, the pressure in the air chamber 8 is preferably, but not necessarily, 0.2 to 0.5 bar higher than the pressure in the lubricant chamber 7 is provided circumferentially around the propeller shaft 1.

The method comprises preferably, but not necessarily, providing the first valve 20 in the air return line 16 within the pod housing of the pod 2.

The method comprises preferably, but not necessarily maintaining essentially the same pressure within the pod 2 and within the hull 3 of the ship.

The method comprises preferably, but not necessarily, arranging the compressed air source 13 outside the pod 2 and within the hull 3 of the ship.

Next the arrangement for sealing a propeller shaft 1 located under water and some embodiments and variants of the arrangement will be described in greater detail.

In the arrangement, the propeller shaft 1 is arranged at a pod 2 that is suspended at a hull 3 of a ship. The pod 2 can be pivotable suspended at the hull 3 of a ship.

The arrangement comprises an air chamber 8 that is provided circumferentially around the propeller shaft 1, an air supply line 12 configured to supply compressed air from a compressed air source 13 to the air chamber 8, and an air return line 16 configured to discharge compressed air from the air chamber 8 and out of the air return line 16. Compressed air means in this context air, gas, or any mixture thereof.

The pressure in the air chamber 8 is provided circumferentially around the propeller shaft 1is preferably, but not necessarily, about 0.2 to about 0.6 bar higher than a pressure in a pod housing of the pod 2 such as in a pod housing limited by a shell structure (not marked with a reference number) of the pod 2.

The pressure of the compressed air supplied from the compressed air source 12 to the air supply line can be in the range of about 3 to about 10 bar.

The arrangement comprises an intermediate leakage tank 19 that is in fluid connection with the air return line 16 and that is configured to collect liquid present in the compressed air in the air return line 16. The intermediate leakage tank 19 is provided within a pod housing of the pod 2.

The arrangement comprises a drainage arrangement comprising a first valve 20 in the air return line 16 upstream of the intermediate leakage tank 19, a leakage tank 24 that can be provided within the hull 3 of the ship and that is in fluid connection with the intermediate leakage tank 19 by means of a connecting liquid line 25, and a connecting air line 22 in fluid connection with the intermediate leakage tank 19. The drainage arrangement is configured to close the first valve 20 that is provided in the air return line 16 upstream of the intermediate leakage tank 19, and to supply compressed air to the connecting air line 22 to effect flowing of liquid present in the intermediate leakage tank 19 to the leakage tank 24 in the connecting liquid line 25. The pressure of the compressed air that is supplied to the intermediate leakage tank 19 effect flowing of liquid present in the intermediate leakage tank 19 in to a leakage tank 24 is preferably, but not necessarily, in the range of about 1 bar to about 3 bar. The arrangement allows thus to drain the intermediate leakage tank 19 in a controller manner without a need to entering the pod 2, provided that the leakage tank 24 is provided within the hull 3 of the ship. Alternatively, the leakage tank 24 can be provided within the pod housing of the pod 2 in a location that is easily accessible. The arrangement for sealing the propeller shaft is preferably, but not necessarily, configured to supply compressed air from the compressed air source 13 to the air chamber 8 in the air supply line 12 so that a sufficient pressure against water surrounding the pod is maintained in the air chamber 8 circumferentially surrounding the propeller shaft 8 during the described function of the drainage arrangement. The drainage arrangement is preferably, but not necessarily, configured to close the first valve 20 that is provided in the air return line 16 upstream of the intermediate leakage tank 19, and to supply compressed air to the connecting air line 22 to effect flowing of liquid present in the intermediate leakage tank 19 to the leakage tank 24 in the connecting liquid line 25, in regular time intervals such as once every hour.

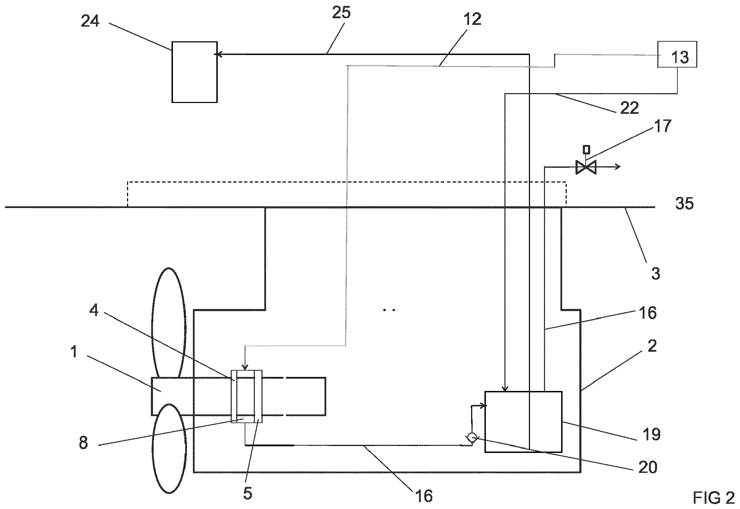

The drainage arrangement comprises preferably, but not necessarily, as illustrated in figures 2 to 4, a second valve 17 in the air return line 16 downstream of the intermediate leakage tank 19 and the drainage arrangement preferably, but not necessarily, is configured to close the second valve 17 in the air return line 16 in connection with the closing of the first valve 20 in the air return line 16. Such second valve 17 prevents fluid from being discharged out of the air return line 16 when supplying pressurized air in the connecting air line 22 to the intermediate leakage tank 19.

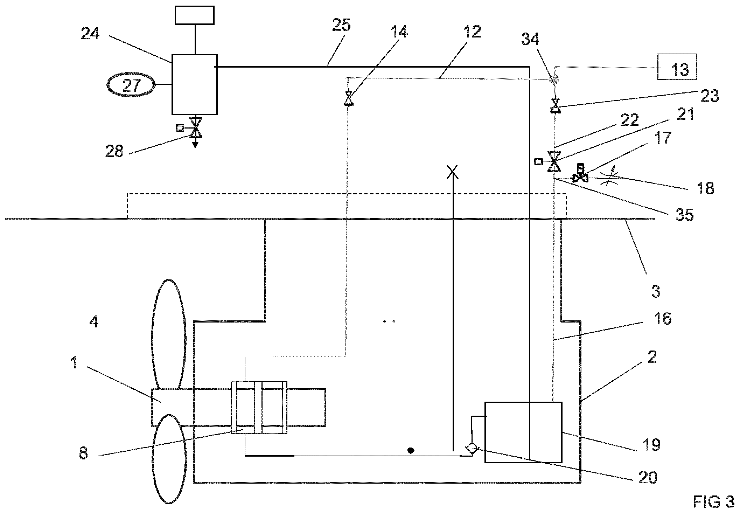

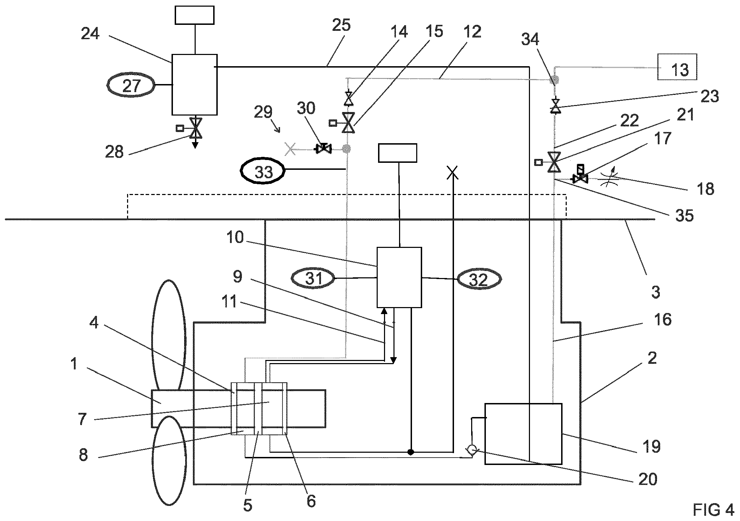

In some embodiments of the arrangement the connecting air line 22 is, as illustrated in the figures 3 and 4, in fluid connection with the intermediate leakage tank 19 so that an upstream end 34 of the connecting air line 22 is in fluid connection with the air supply line 12 that is configured to supply compressed air from the compressed air source 13 to the air chamber 8 that is provided circumferentially around the propeller shaft 1 and so that a downstream end 35 of the connection air line 22 is in fluid connection with the air return line 16 at a point downstream of the intermediate leakage tank 19 provided in the air return line 16 and upstream of a second valve 17 provided in the air return line 16 such that the drainage arrangement is configured to supply said compressed air to the upstream end 34 of the connecting air line 22 from the compressed air source 13, and from the downstream end 35 of the connecting air line 22 to the air return line 16 and in the air return line 16 to the intermediate leakage tank 19 leakage to effect said flowing of liquid present in the intermediate leakage tank 19 to the leakage tank 24 in the connecting liquid line 25. In such embodiments of the arrangement, the connecting air line 22 can be provided with a valve 21 for opening and closing the flow in the connecting air line 22. In such embodiments of the arrangement, a first pressure regulator 14 can be provided in the air supply line 12, the connecting air line 22 can be provided with a valve 21 and with a second pressure regulator 23 configured to provide a higher pressure than the first pressure regulator 14 that is provided in the air supply line 12, and the first valve 20 in the air return line 16 upstream of the intermediate leakage tank 19 can be in the form of a check valve, wherein the drainage arrangement is configured to open the third valve 21 provided in the connecting air line 22 to supply compressed air through the second pressure regulator 23 in the connecting air line 22 and in the air return line 16 into the intermediate leakage tank 19 to effect closing of the first valve 20 provided in the air return line 16 and to effect flowing of liquid present in the intermediate leakage tank 19 to the leakage tank 24 in the connecting liquid line 25. Figures 3 and 4 illustrates such embodiments. The possible first pressure regulator 14 in the air supply line 12 is preferably, but not necessarily, arranged outside the pod 2 and within the hull 3 of the ship. The possible second pressure regulator 23 and/or the possible third valve 21 are preferably, but not necessarily, arranged outside the pod 2 and within the hull 3 of the ship. If the connecting air line 22 is provided with a valve 21 for opening and closing the flow in the connecting air line 22, the arrangement comprises preferably, but not necessarily, a pressure sensor 33 connected to the air supply line 12, whereby the arrangement is configures to send a signal from the pressure sensor 33 to the third valve 21 provided in the connecting air line 22 of the drainage circuit arrangement and triggering an alarm and closing the third valve 21 provided in the connecting air line 22 of the drainage arrangement if the pressure in the air supply line 12 exceeds a predetermined threshold value when the third valve 21 provided in the connecting air line 22 of the drainage arrangement is open as an indication that the first valve 20 leaks so as to prevent the pressure in the air chamber 8 circumferentially provided around the propeller shaft 1 to raise too much and so as to prevent damage of the air chamber 8 .

The face seal 4 is preferably, but not necessarily, configured separate the air chamber 8 from water surrounding the pod.

The air return line 16 is preferably, but not necessarily, configured to discharge compressed air out of through a throttle valve 18. The throttle valve 18 of the air return line 16 is preferably, but not necessarily, arranged outside the pod 2 and within the hull 3 of the ship.

The arrangement comprises preferably, but not necessarily, a level monitor 27 configured to monitor the liquid level in the leakage tank 24, wherein the level monitor is configured to give a signal to a drainage valve 28 to effect opening of a drainage valve 28 of the leakage tank 24 if a predetermined threshold liquid level in the leakage tank 24 is exceeded.

The arrangement comprises preferably, but not necessarily, a fourth valve 15 in the air supply line 12. The fourth valve 15 of the air supply line 12 is preferably, but not necessarily, arranged outside the pod 2 and within the hull 3 of the ship. If the arrangement comprises a fourth valve 15 of the air supply line 12, the arrangement can comprise a flushing circuit arrangement configured to feed water into the air supply line 12 downstream of the fourth valve 15 into the air supply line 12, wherein the flushing circuit arrangement comprises a water source 29, a valve 30 downstream of the water source 29 and upstream of the air supply line 12, and wherein the flushing circuit arrangement being configured to close the fourth valve 15 of the air supply line 12 and to open the valve 30 so as to feed water into the air supply line 12 and via the air chamber 8 that circumferentially surrounds the propeller shaft 1 int the air return line 16. Figure 4 illustrates a such embodiment. The water source and the valve 30 are preferably, but not necessarily, provided outside the pod 2 and within the hull 3 of the ship.

The chamber 8 is preferably, but not necessarily, provided between a face seal 4 that is provided circumferentially around the propeller shaft 1 and a first seal ring 5 that is provided circumferentially around the propeller shaft 1. The arrangement comprises preferably, but not necessarily, a lubricant chamber 7 provided between the first seal ring 5 that is provided circumferentially around the propeller shaft 1 and a second seal ring 6 that is provided circumferentially around the propeller shaft 1, wherein the lubricant chamber 7 is provided circumferentially around the propeller shaft 1. The arrangement comprises preferably, but not necessarily, a lubricant supply line 9 configured to supply lubricant, preferably, but not necessarily by means of gravity, from a lubricant tank 10 to the lubricant chamber 7 and a lubricant return line 11 configured to supply lubricant from the lubricant chamber 7 to the lubricant tank 10. Figure 4 illustrates a embodiment. A first level sensor 31 and a second level sensor 32 are preferably, but not necessarily, configured to monitor the level of lubricant in the lubricant tank 10. The possible first level sensor 31 and the possible second level sensor 32 and the possible lubricant tank 10 are preferably, but not necessarily, provided within the pod housing of the pod 2. If such lubricant chamber 7 is provided circumferentially around the propeller shaft 1, the pressure in the lubricant chamber 7 is preferably, but not necessarily, 0.04 to 0.08 bar higher than a pressure in a pod housing of the pod 2 such as in a pod housing limited by a shell structure (not marked with a reference number) of the pod 2. If such lubricant chamber 7 is provided circumferentially around the propeller shaft 1, the pressure in the air chamber 8 is preferably, but not necessarily, 0.2 to 0.5 bar higher than the pressure in the lubricant chamber 7 is provided circumferentially around the propeller shaft 1.

The first valve 20 in the return air line 16 is preferably, but not necessarily, provided within the pod 2 housing of the pod 2.

The arrangement is preferably, but not necessarily, configured to maintain essentially the same pressure within the pod 2 and within the hull 3 of the ship.

The compressed air source 13 is preferably, but not necessarily, arranged outside the pod 2 and within the hull 3 of the ship.

The possible second valve 17 in the air return line 16 downstream of the intermediate leakage tank 19 is preferably, but not necessarily, arranged outside the pod 2 and within the hull 3 of the ship.

It is apparent to a person skilled in the art that as technology advances, the basic idea of the invention can be implemented in various ways. The invention and its embodiments are therefore not restricted to the above examples, but they may vary within the scope of the claims.

### List of reference numerals

- 1.: Propeller shaft
- 2.: Pod
- 3.: Hull
- 4.: Face seal
- 5.: First seal ring
- 6.: Second seal ring
- 7.: Lubricant chamber
- 8.: Air chamber
- 9.: Lubricant supply line
- 10.: Lubricant tank
- 11.: Lubricant return line
- 12.: Air supply line
- 13.: Compressed air source
- 14.: First pressure regulator
- 15.: Fourth valve
- 16.: Air return line
- 17.: Second valve
- 18.: Throttle valve
- 19.: Intermediate leakage tank
- 20.: First valve
- 21.: Third valve
- 22.: Connecting air line
- 23.: Second pressure regulator
- 24.: Leakage tank
- 25.: Connecting liquid line
- 26.: Ventilator valve
- 27.: Level monitor
- 28.: Drainage valve
- 29.: Water source
- 30.: Fifth valve
- 31.: First level sensor
- 32.: Second level sensor
- 33.: Pressure sensor

## Claims

1. A method for sealing a propeller shaft (1) located under water, wherein the propeller shaft (1) is arranged at a pod (2) that is suspended at a hull (3) of a ship and wherein an air chamber (8) is provided circumferentially around the propeller shaft (1), wherein the method comprising
supplying compressed air from a compressed air source (13) in an air supply line (12) to the air chamber (8),
discharging compressed air from the air chamber (8) in an air return line (16) and out of the air return line (16), and
colleting liquid present in the compressed air discharged from the air chamber (8) in an intermediate leakage tank (19) that is provided in the air return line (16) within a pod housing of the pod (2),
**characterized**
**by** closing the air return line (16) upstream of the intermediate leakage tank (19), and
by supplying compressed air to the intermediate leakage tank (19) to effect flowing of liquid present in the intermediate leakage tank (19) to a leakage tank (24).

2. The method according to claim 1, **characterized**
**by** closing the air return line (16) downstream of the intermediate leakage tank (19) in connection with closing the air return line (16).

3. The method according to claim 2, **characterized**
**by** supplying said compressed air to the intermediate leakage tank (19) by supplying compressed air to an upstream end (34) of a connecting air line (22) from the air supply line (12), and by supplying compressed air from a downstream end (35) the connecting air line (22) to the air return line (16) at a point of the air return line (16) downstream of the intermediate leakage tank (19, and by supplying compressed air in the air return line (16) to the intermediate leakage tank (19) to effect said flowing of liquid present in the intermediate leakage tank (19) to the leakage tank (24) in the connecting liquid line (25).

4. The method according to claim 3, **characterized**
**by** providing a first valve (20) in the form of a check valve in the air return line (16) upstream of the intermediate leakage tank (19),
by supplying compressed air from the compressed air source (13) to the air chamber (8) through a first pressure regulator (14) in the air supply line (12),
by supplying compressed air in the connecting air line (22) through a third valve (21) and through a second pressure regulator (23) configured to provide a higher pressure than the first pressure regulator (14), and
by said closing of the air return line (16) upstream of the intermediate leakage tank (19) is effected by a difference between the pressure provided by the first pressure regulator (14) and the pressure provided by the second pressure regulator (23) causing the first valve (20) in the form of a check valve to close.

5. The method according to claim 4, **characterized**
**by** sending a signal from a pressure sensor (33) functionally connected to the air supply line (12) to the third valve (21) provided in the connecting air line (22) and triggering an alarm and/or closing the third valve (21) provided in the connecting air line (22) if the pressure in the air supply line (12) exceeds a predetermined threshold value when the third valve (21) provided in the connecting air line (22) is open.

6. An arrangement for sealing a propeller shaft (1) located under water, wherein the propeller shaft (1) is arranged at a pod (2) that is suspended at a hull (3) of a ship,
wherein the arrangement comprises
an air chamber (8) that is provided circumferentially around the propeller shaft (1),
an air supply line (12) configured to supply compressed air from a compressed air source (13) to the air chamber (8),
an air return line (16) configured to discharge compressed air from the air chamber (8) and out of the air return line (16), and
an intermediate leakage tank (19) for collecting liquid present in the air is provided in the air return line (16), wherein the intermediate leakage tank (19) being provided within a pod housing of the pod (2),
**characterized**
**by** a drainage arrangement comprising
a first valve (20) in the air return line (16) upstream of the intermediate leakage tank (19),
a leakage tank (24) in fluid connection with the intermediate leakage tank (19) by means of a connecting liquid line (25), and
a connecting air line (22) in fluid connection with the intermediate leakage tank (19),
by the drainage arrangement being configured to close the first valve (20) in the air return line (16), to supply compressed air in the connecting air line (22) to the intermediate leakage tank (19) to effect flowing of liquid present in the intermediate leakage tank (19) to the leakage tank (24) in the connecting liquid line (25).

7. The arrangement according to claim 6, **characterized**
**by** the drainage arrangement comprises a second valve (17) in the air return line (16) downstream of the intermediate leakage tank (19), and
by the drainage arrangement being configured to close the second valve (17) in the air return line (16) in connection with the closing of the first valve (20) in the air return line (16).

8. The arrangement according to claim 7, **characterized**
**by** the connecting air line (22) being in fluid connection with the intermediate leakage tank (19) so that an upstream end (34) of the connecting air line (22) is in fluid connection with the air supply line (12) and so that a downstream end (35) of the connection air line is in fluid connection with the air return line (16) at a point upstream of the second valve (17) in the air return line (16) and downstream of the intermediate leakage tank (19), and
by the drainage arrangement being configured to supply said compressed air to the upstream end (34) of the connecting air line (22) from the compressed air source (13) that is configured to supply compressed air to the air chamber (8) that is provided circumferentially around the propeller shaft (1), and from downstream end (35) of the connecting air line (22) to the air return line (16) and in the air return line (16) to the intermediate leakage tank (19) to effect said flowing of liquid present in the intermediate leakage tank (19) to the leakage tank (24) in the connecting liquid line (25).

9. The arrangement according to claim 8, **characterized**
**by** the connecting air line (22) being provided with a third valve (21), and
by the drainage arrangement being configured to open the third valve (21) provided in the connecting air line (22) to supply compressed air to the intermediate leakage tank (19) to effect flowing of liquid present in the intermediate leakage tank (19) to the leakage tank (24) in the connecting liquid line (25).

10. The arrangement according to claim 8, **characterized**
**by** a first pressure regulator (14) in the air supply line (12), and
by the connecting air line (22) being provided with a third valve (21) and with a second pressure regulator (23) configured to provide a higher pressure than the first pressure regulator (14), and
by the drainage arrangement being configured to open the third valve (21) provided in the connecting air line (22) to supply compressed air through the second pressure regulator (23) in the connecting air line (22) and in the air return line (16) into the intermediate leakage tank (19) to effect flowing of liquid present in the intermediate leakage tank (19) to the leakage tank (24) in the connecting liquid line (25).

11. The arrangement according to claim 8, **characterized**
**by** a first pressure regulator (14) in the air supply line (12),
by the connecting air line (22) being provided with a third valve (21) and with a second pressure regulator (23) configured to provide a higher pressure than the first pressure regulator (14),
by the first valve (20) in the air return line (16) upstream of the intermediate leakage tank (19) being in the form of a check valve, and
by the drainage arrangement being configured to open the third valve (21) provided in the connecting air line (22) to supply compressed air through the second pressure regulator (23) in the connecting air line (22) and in the air return line (16) into the intermediate leakage tank (19) to effect closing of the first valve (20) and to effect flowing of liquid present in the intermediate leakage tank (19) to the leakage tank (24) in the connecting liquid line (25).

12. The arrangement according to any of the claims 9 to 11, **characterized**
**by** connecting a pressure sensor (33) to the air supply line (12), and
by sending a signal from the pressure sensor (33) to the third valve (21) provided in the connecting air line (22) of the drainage circuit arrangement and triggering an alarm and closing the third valve (21) provided in the connecting air line (22) of the drainage circuit arrangement if the pressure in the air supply line (12) exceeds a predetermined threshold value when the third valve (21) provided in the connecting air line (22) of the drainage circuit arrangement is open.

13. The arrangement according to any of the claims 6 to 12, **characterized**
**by** a lubricant chamber (7) provided between a first seal ring (5) provided circumferentially around the propeller shaft (1) and a second seal ring (6) that is provided circumferentially around the propeller shaft (1), wherein the lubricant chamber (7) is provided circumferentially around the propeller shaft (1).

14. The arrangement according to claim 13, **characterized**
**by** the air chamber (8) provided between a face seal (4) provided circumferentially around the propeller shaft (1) and the first seal ring.

15. The arrangement according to claim 13 or 14, **characterized**
**by** a lubricant supply line (9) configured to supply lubricant from a lubricant tank (10) to the lubricant chamber (7) and a lubricant return line (11) configured to supply lubricant from the lubricant chamber (7) to the lubricant tank (10).

## Patentansprüche

1. Verfahren zum Abdichten einer unter Wasser befindlichen Propellerwelle (1), wobei die Propellerwelle (1) an einer von einem Rumpf (3) eines Schiffs abgehängten Gondel (2) angeordnet ist, und wobei eine Luftkammer (8) in Umfangsrichtung rund um die Propellerwelle (1) vorgesehen ist, wobei das Verfahren umfasst
Zuführen von Druckluft aus einer Druckluftquelle (13) in einer Luftzuführungsleitung (12) zur Luftkammer (8),
Austragen von Druckluft aus der Luftkammer (8) in einer Luftrückführungsleitung (16) und aus der Luftrückführungsleitung (16) heraus, und
Sammeln von Flüssigkeit, die in der aus der Luftkammer (8) ausgetragenen Druckluft enthalten ist, in einem Zwischensammelbehälter (19), der in der Luftrückführungsleitung (16) in einem Gondelgehäuse der Gondel (2) vorgesehen ist,
**gekennzeichnet**
**durch** Schließen der Luftrückführungsleitung (16) anströmseitig zum Zwischensammelbehälter (19), und
**durch** Zuführen von Druckluft zum Zwischensammelbehälter (19), um das Fließen von im Zwischensammelbehälter (19) vorhandener Flüssigkeit zu einem Sammelbehälter (24) zu bewirken.

2. Verfahren nach Anspruch 1, **gekennzeichnet**
**durch** Schließen der Luftrückführungsleitung (16) abströmseitig vom Zwischensammelbehälter (19) in Verbindung mit dem Schließen der Luftrückführungsleitung (16).

3. Verfahren nach Anspruch 2, **gekennzeichnet**
**durch** Zuführen der Druckluft zum Zwischensammelbehälter (19) durch Zuführen von Druckluft zu einem anströmseitigen Ende (34) einer Verbindungsluftleitung (22) aus der Luftzuführungsleitung (12), und durch Zuführen von Druckluft von einem abströmseitigen Ende (35) der Verbindungsluftleitung (22) zur Luftrückführungsleitung (16) an einem abströmseitig vom Zwischensammelbehälter (19) gelegenen Punkt der Luftrückführungsleitung (16), und durch Zuführen von Druckluft in der Luftrückführungsleitung (16) zum Zwischensammelbehälter (19), um das Fließen von im Zwischensammelbehälter (19) vorhandener Flüssigkeit zum Sammelbehälter (24) in der Verbindungsflüssigkeitsleitung (25) zu bewirken.

4. Verfahren nach Anspruch 3, **gekennzeichnet**
**durch** Vorsehen eines ersten Ventils (20) in Form eines Rückschlagventils in der Luftrückführungsleitung (16) anströmseitig zum Zwischensammelbehälter (19),
**durch** Zuführen von Druckluft aus der Druckluftquelle (13) zur Luftkammer (8) über einen ersten Druckregler (14) in der Luftzuführungsleitung (12),
**durch** Zuführen von Druckluft in der Verbindungsluftleitung (22) über ein drittes Ventil (21) und über einen zweiten Druckregler (23), der dazu ausgelegt ist, einen höheren Druck als der erste Druckregler (14) bereitzustellen, und
**dadurch**, dass das Schließen der Luftrückführungsleitung (16) anströmseitig zum Zwischensammelbehälter (19) dadurch erfolgt, dass eine Differenz zwischen dem vom ersten Druckregler (14) bereitgestellten Druck und dem vom zweiten Druckregler (23) bereitgestellten Druck das Schließen des ersten Ventils (20) in Form eines Rückschlagventils bewirkt.

5. Verfahren nach Anspruch 4, **gekennzeichnet**
**durch** Senden eines Signals von einem mit der Luftzuführungsleitung (12) funktionswirksam verbundenen Drucksensor (33) zu dem in der Verbindungsluftleitung (22) vorgesehenen dritten Ventil (21) und Auslösen eines Alarms und/oder Schließen des in der Verbindungsluftleitung (22) vorgesehenen dritten Ventils (21), falls der Druck in der Luftzuführungsleitung (12) einen vorherbestimmten Schwellenwert überschreitet, wenn das in der Verbindungsluftleitung (22) vorgesehene dritte Ventil (21) offen ist.

6. Anordnung zum Abdichten einer unter Wasser befindlichen Propellerwelle (1), wobei die Propellerwelle (1) an einer von einem Rumpf (3) eines Schiffs abgehängten Gondel (2) angeordnet ist,
wobei die Anordnung umfasst
eine Luftkammer (8), die in Umfangsrichtung rund um die Propellerwelle (1) vorgesehen ist,
eine Luftzuführungsleitung (12), die dazu ausgelegt ist, Druckluft aus einer Druckluftquelle (13) zur Luftkammer (8) zu führen,
eine Luftrückführungsleitung (16), die dazu ausgelegt ist, Druckluft aus der Luftkammer (8) und aus der Luftrückführungsleitung (16) auszutragen, und
einen Zwischensammelbehälter (19) zum Sammeln von in der Luft vorhandener Flüssigkeit, der in der Luftrückführungsleitung (16) vorgesehen ist, wobei der Zwischensammelbehälter (19) in einem Gondelgehäuse der Gondel (2) vorgesehen ist,
**gekennzeichnet**
**durch** eine Entwässerungsanordnung umfassend
ein erstes Ventil (20) in der Luftrückführungsleitung (16) anströmseitig zum Zwischensammelbehälter (19),
einen Sammelbehälter (24) in fluidtechnischer Verbindung mit dem Zwischensammelbehälter (19) mittels einer Verbindungsflüssigkeitsleitung (25), und
eine Verbindungsluftleitung (22) in fluidtechnischer Verbindung mit dem Zwischensammelbehälter (19),
**dadurch**, dass die Entwässerungsanordnung dazu ausgelegt ist, das erste Ventil (20) in der Luftrückführungsleitung (16) zu schließen, Druckluft in der Verbindungsluftleitung (22) zum Zwischensammelbehälter (19) zu führen, um das Fließen von im Zwischensammelbehälter (19) vorhandener Flüssigkeit zum Sammelbehälter (24) in der Verbindungsflüssigkeitsleitung (25) zu bewirken.

7. Anordnung nach Anspruch 6, **gekennzeichnet**
**dadurch, dass** die Entwässerungsanordnung ein zweites Ventil (17) in der Luftrückführungsleitung (16) abströmseitig vom Zwischensammelbehälter (19) umfasst, und
dadurch, dass die Entwässerungsanordnung dazu ausgelegt ist, in Verbindung mit dem Schließen des ersten Ventils (20) in der Luftrückführungsleitung (16) das zweite Ventil (17) in der Luftrückführungsleitung (16) zu schließen.

8. Anordnung nach Anspruch 7, **gekennzeichnet**
**dadurch, dass** die Verbindungsluftleitung (22) mit dem Zwischensammelbehälter (19) fluidtechnisch verbunden ist, so dass ein anströmseitiges Ende (34) der Verbindungsluftleitung (22) mit der Luftzuführungsleitung (12) fluidtechnisch verbunden ist und so dass ein abströmseitiges Ende (35) der Verbindungsluftleitung mit der Luftrückführungsleitung (16) an einem anströmseitig zum zweiten Ventil (17) in der Luftrückführungsleitung (16) und abströmseitig vom Zwischensammelbehälter (19) gelegenen Punkt fluidtechnisch verbunden ist, und
dadurch, dass die Entwässerungsanordnung ausgelegt ist zum Zuführen der Druckluft zum anströmseitigen Ende (34) der Verbindungsluftleitung (22) aus der Druckluftquelle (13), die dazu ausgelegt ist, Druckluft zu der in Umfangsrichtung rund um die Propellerwelle (1) vorgesehenen Luftkammer (8) und vom abströmseitigen Ende (35) der Verbindungsluftleitung (22) zur Luftrückführungsleitung (16) und in der Luftrückführungsleitung (16) zum Zwischensammelbehälter (19) Leckage zu führen, um das Fließen von im Zwischensammelbehälter (19) vorhandener Flüssigkeit zum Sammelbehälter (24) in der Verbindungsflüssigkeitsleitung (25) zu bewirken.

9. Anordnung nach Anspruch 8, **gekennzeichnet**
**dadurch, dass** die Verbindungsluftleitung (22) mit einem dritten Ventil (21) versehen ist, und
dadurch, dass die Entwässerungsanordnung dazu ausgelegt ist, das in der Verbindungsluftleitung (22) vorgesehene dritte Ventil (21) zu öffnen, um Druckluft zum Zwischensammelbehälter (19) zu führen, um das Fließen von im Zwischensammelbehälter (19) vorhandener Flüssigkeit zum Sammelbehälter (24) in der Verbindungsflüssigkeitsleitung (25) zu bewirken.

10. Anordnung nach Anspruch 8, **gekennzeichnet**
**durch** einen ersten Druckregler (14) in der Luftzuführungsleitung (12), und
**dadurch**, dass die Verbindungsluftleitung (22) mit einem dritten Ventil (21) und mit einem zweiten Druckregler (23), der dazu ausgelegt ist, einen höheren Druck als der erste Druckregler (14) bereitzustellen, versehen ist, und
**dadurch**, dass die Entwässerungsanordnung dazu ausgelegt ist, das in der Verbindungsluftleitung (22) vorgesehene dritte Ventil (21) zu öffnen, um Druckluft über den zweiten Druckregler (23) in der Verbindungsluftleitung (22) und in der Luftrückführungsleitung (16) in den Zwischensammelbehälter (19) zu führen, um das Fließen von im Zwischensammelbehälter (19) vorhandener Flüssigkeit zum Sammelbehälter (24) in der Verbindungsflüssigkeitsleitung (25) zu bewirken.

11. Anordnung nach Anspruch 8, **gekennzeichnet**
**durch** einen ersten Druckregler (14) in der Luftzuführungsleitung (12),
**dadurch**, dass die Verbindungsluftleitung (22) mit einem dritten Ventil (21) und mit einem zweiten Druckregler (23), der dazu ausgelegt ist, einen höheren Druck als der erste Druckregler (14) bereitzustellen, versehen ist,
**dadurch**, dass das erste Ventil (20) in der Luftrückführungsleitung (16) anströmseitig zum Zwischensammelbehälter (19) in Form eines Rückschlagventils vorgesehen ist, und
**dadurch**, dass die Entwässerungsanordnung dazu ausgelegt ist, das in der Verbindungsluftleitung (22) vorgesehene dritte Ventil (21) zu öffnen, um Druckluft über den zweiten Druckregler (23) in der Verbindungsluftleitung (22) und in der Luftrückführungsleitung (16) in den Zwischensammelbehälter (19) zu führen, um das Schließen des ersten Ventils (20) zu bewirken und das Fließen von im Zwischensammelbehälter (19) vorhandener Flüssigkeit zum Sammelbehälter (24) in der Verbindungsflüssigkeitsleitung (25) zu bewirken.

12. Anordnung nach einem der Ansprüche 9 bis 11, **gekennzeichnet**
**durch** Anschließen eines Drucksensors (33) an die Luftzuführungsleitung (12), und
**durch** Senden eines Signals vom Drucksensor (33) zu dem in der Verbindungsluftleitung (22) der Entwässerungskreislaufanordnung vorgesehenen dritten Ventil (21) und Auslösen eines Alarms und Schließen des in der Verbindungsluftleitung (22) der Entwässerungskreislaufanordnung vorgesehenen dritten Ventils (21), falls der Druck in der Luftzuführungsleitung (12) einen vorherbestimmten Schwellenwert überschreitet, wenn das in der Verbindungsluftleitung (22) der Entwässerungskreislaufanordnung vorgesehene dritte Ventil (21) offen ist.

13. Anordnung nach einem der Ansprüche 6 bis 12, **gekennzeichnet**
**durch** eine Schmiermittelkammer (7), die zwischen einem in Umfangsrichtung rund um die Propellerwelle (1) vorgesehenen ersten Dichtring (5) und einem in Umfangsrichtung rund um die Propellerwelle (1) vorgesehenen zweiten Dichtring (6) vorgesehen ist, wobei die Schmiermittelkammer (7) in Umfangsrichtung rund um die Propellerwelle (1) vorgesehen ist.

14. Anordnung nach Anspruch 13, **gekennzeichnet**
**dadurch, dass** die Luftkammer (8) zwischen einer in Umfangsrichtung rund um die Propellerwelle (1) vorgesehenen Stirndichtung (4) und dem ersten Dichtring vorgesehen ist.

15. Anordnung nach Anspruch 13 oder 14, **gekennzeichnet**
**durch** eine Schmiermittelzuführleitung (9), die dazu ausgelegt ist, Schmiermittel aus einem Schmiermittelbehälter (10) zur Schmiermittelkammer (7) zu führen, und eine Schmiermittelrücklaufleitung (11), die dazu ausgelegt ist, Schmiermittel von der Schmiermittelkammer (7) zum Schmiermittelbehälter (10) zu führen.

## Revendications

1. Procédé pour étancher un arbre d'hélice (1) situé sous l'eau, dans lequel l'arbre d'hélice (1) est disposé à une nacelle (2) qui est suspendue à une coque (3) d'un navire, et dans lequel une chambre d'air (8) est prévue circonférentiellement autour de l'arbre d'hélice (1), ledit procédé comprenant les étapes consistant à
amener de l'air comprimé d'une source d'air comprimé (13) dans une conduite d'amenée d'air (12) vers la chambre d'air (8),
évacuer de l'air comprimé de la chambre d'air (8) dans une conduite de retour d'air (16) et en dehors de la conduite de retour d'air (16), et
collecter du liquide présent dans l'air comprimé évacué de la chambre d'air (8) dans un réservoir de collecte intermédiaire (19) qui est prévu dans la conduite de retour d'air (16) à l'intérieur d'un carter de la nacelle (2),
**caractérisé**
**par** l'étape consistant à fermer la conduite de retour d'air (16) en amont du réservoir de collecte intermédiaire (19), et
par l'étape consistant à amener de l'air comprimé vers le réservoir de collecte intermédiaire (19) pour effectuer l'écoulement du liquide présent dans le réservoir de collecte intermédiaire (19) vers un réservoir de collecte (24).

2. Procédé selon la revendication 1, **caractérisé**
**par** l'étape consistant à fermer la conduite de retour d'air (16) en aval du réservoir de collecte intermédiaire (19) en liaison avec la fermeture de la conduite de retour d'air (16).

3. Procédé selon la revendication 2, **caractérisé**
**par** l'étape consistant à amener de l'air comprimé vers le réservoir de collecte intermédiaire (19) en amenant de l'air comprimé vers une extrémité amont (34) d'une conduite d'air de liaison (22) en provenance de la conduite d'amenée d'air (12), et par l'étape consistant à amener de l'air comprimé d'une extrémité aval (35) de la conduite d'air de liaison (22) vers la conduite de retour d'air (16) à un point de la conduite de retour d'air (16) en aval du réservoir de collecte intermédiaire (19), et par l'étape consistant à amener de l'air comprimé dans la conduite de retour d'air (16) vers le réservoir de collecte intermédiaire (19) pour effectuer ledit écoulement du liquide présent dans le réservoir de collecte intermédiaire (19) vers le réservoir de collecte (24) dans la conduite de liquide de liaison (25).

4. Procédé selon la revendication 3, **caractérisé**
**par** l'étape consistant à prévoir une première vanne (20) sous forme d'un clapet antiretour dans la conduite de retour d'air (16) en amont du réservoir de collecte intermédiaire (19),
par l'étape consistant à amener de l'air comprimé d'une source d'air comprimé (13) vers la chambre d'air (8) par un premier régulateur de pression (14) dans la conduite d'amenée d'air (12),
par l'étape consistant à amener de l'air comprimé dans la conduite d'air de liaison (22) par une troisième vanne (21) et par un second régulateur de pression (23) configuré pour fournir une pression plus élevée que le premier régulateur de pression (14), et
en ce que ladite fermeture de la conduite de retour d'air (16) en amont du réservoir de collecte intermédiaire (19) est effectuée par une différence entre la pression fournie par le premier régulateur de pression (14) et la pression fournie par le second régulateur de pression (23) provoquant la fermeture de la première vanne (20) sous forme d'un clapet antiretour.

5. Procédé selon la revendication 4, **caractérisé**
**par** l'étape consistant à envoyer un signal depuis un capteur de pression (33) relié fonctionnellement à la conduite d'amenée d'air (12) à la troisième vanne (21) prévue dans la conduite d'air de liaison (22) et à déclencher une alerte et/ou fermer la troisième vanne (21) prévue dans la conduite d'air de liaison (22) si la pression dans la conduite d'amenée d'air (12) dépasse un seuil prédéterminé lorsque la troisième vanne (21) prévue dans conduite d'air de liaison (22) est ouverte.

6. Agencement pour étancher un arbre d'hélice (1) situé sous l'eau, dans lequel l'arbre d'hélice (1) est disposé à une nacelle (2) qui est suspendue à une coque (3) d'un navire,
ledit agencement comprenant
une chambre d'air (8) qui est prévue circonférentiellement autour de l'arbre d'hélice (1),
une conduite d'amenée d'air (12) configurée pour amener de l'air comprimé d'une source d'air comprimée (13) vers la chambre d'air (8),
une conduite de retour d'air (16) configurée pour évacuer de l'air comprimé de la chambre d'air (8) et de la conduite de retour d'air (16), et
un réservoir de collecte intermédiaire (19) pour collecter du liquide présent dans l'air, prévu dans la conduite de retour d'air (16), ledit réservoir de collecte intermédiaire (19) étant prévu à l'intérieur d'un carter de la nacelle (2),
**caractérisé**
**par** un agencement de drainage comprenant
une première vanne (20) dans la conduite de retour d'air (16) en amont du réservoir de collecte intermédiaire (19),
un réservoir de collecte (24) en communication fluidique avec le réservoir de collecte intermédiaire (19) au moyen d'une conduite de liquide de liaison (25), et
une conduite d'air de liaison (22) en communication fluidique avec le réservoir de collecte intermédiaire (19),
en ce que l'agencement de drainage est configuré pour fermer la première vanne (20) dans la conduite de retour d'air (16), amener de l'air comprimé dans la conduite d'air de liaison (22) vers le réservoir de collecte intermédiaire (19) pour effectuer l'écoulement d'un liquide présent dans le réservoir de collecte intermédiaire (19) vers le réservoir de collecte (24) dans la conduite de liquide de liaison (25).

7. Agencement selon la revendication 6, **caractérisé**
**en ce que** l'agencement de drainage comprend une deuxième vanne (17) dans la conduite de retour d'air (16) en aval du réservoir de collecte intermédiaire (19), et
**en ce que** l'agencement de drainage est configuré pour fermer la deuxième vanne (17) dans la conduite de retour d'air (16) en liaison avec la fermeture de la première vanne (20) dans la conduite de retour d'air (16).

8. Agencement selon la revendication 7, **caractérisé**
**en ce que** la conduite d'air de liaison (22) est en communication fluidique avec le réservoir de collecte intermédiaire (19) de sorte qu'une extrémité amont (34) de la conduite d'air de liaison (22) est en communication fluidique avec la conduite d'amenée d'air (12) et de sorte qu'une extrémité aval (35) de la conduite d'air de liaison est en communication fluidique avec la conduite de retour d'air (16) à un point en amont de la deuxième vanne (17) dans la conduite de retour d'air (16) et en aval du réservoir de collecte intermédiaire (19), et
**en ce que** l'agencement de drainage est configuré pour amener de l'air comprimé vers l'extrémité amont (34) de la conduite d'air de liaison (22) depuis la source d'air comprimé (13) qui est configurée pour amener de l'air comprimé vers la chambre d'air (8) qui est prévue circonférentiellement autour de l'arbre d'hélice (1), et depuis l'extrémité aval (35) de la conduite d'air de liaison (22) vers la conduite de retour d'air (16) et dans la conduite de retour d'air (16) vers le réservoir de collecte intermédiaire (19) pour effectuer ledit écoulement du liquide présent dans le réservoir de collecte intermédiaire (19) vers le réservoir de collecte (24) dans la conduite de liquide de liaison (25).

9. Agencement selon la revendication 8, **caractérisé**
**en ce que** la conduite d'air de liaison (22) est pourvue d'une troisième vanne (21), et
**en ce que** l'agencement de drainage est configuré pour ouvrir la troisième vanne (21) prévue dans la conduite d'air de liaison (22) afin d'amener de l'air comprimé vers le réservoir de collecte intermédiaire (19) pour effectuer l'écoulement d'un liquide présent dans le réservoir de collecte intermédiaire (19) vers le réservoir de collecte (24) dans la conduite de liquide de liaison (25).

10. Agencement selon la revendication 8, **caractérisé**
**par** un premier régulateur de pression (14) dans la conduite d'amenée d'air (12), et
en ce que la conduite d'air de liaison (22) est pourvue d'une troisième vanne (21) et d'un second régulateur de pression (23) configuré pour fournir une pression plus élevée que le premier régulateur de pression (14), et
en ce que l'agencement de drainage est configuré pour ouvrir la troisième vanne (21) prévue dans la conduite d'air de liaison (22) afin d'amener de l'air comprimé par le second régulateur de pression (23) dans la conduite d'air de liaison (22) et dans la conduite de retour d'air (16) vers le réservoir de collecte intermédiaire (19) pour effectuer l'écoulement d'un liquide présent dans le réservoir de collecte intermédiaire (19) vers le réservoir de collecte (24) dans la conduite de liquide de liaison (25).

11. Agencement selon la revendication 8, **caractérisé**
**par** un premier régulateur de pression (14) dans la conduite d'amenée d'air (12),
en ce que la conduite d'air de liaison (22) est pourvue d'une troisième vanne (21) et d'un second régulateur de pression (23) configuré pour fournir une pression plus élevée que le premier régulateur de pression (14), et
en ce que la première vanne (20) dans la conduite de retour d'air (16) en amont du réservoir de collecte intermédiaire (19) est sous forme de clapet antiretour, et
en ce que l'agencement de drainage est configuré pour ouvrir la troisième vanne (21) prévue dans la conduite d'air de liaison (22) afin d'amener de l'air comprimé par le second régulateur de pression (23) dans la conduite d'air de liaison (22) et dans la conduite de retour d'air (16) vers le réservoir de collecte intermédiaire (19) pour effectuer la fermeture de la première vanne (20) et pour effectuer l'écoulement d'un liquide présent dans le réservoir de collecte intermédiaire (19) vers le réservoir de collecte (24) dans la conduite de liquide de liaison (25).

12. Agencement selon l'une des revendications 9 à 11, **caractérisé**
**par** le raccordement d'un capteur de pression (33) à la conduite d'amenée d'air (12), et
par l'envoi d'un signal du capteur de pression (33) à la troisième vanne (21) prévue dans la conduite d'air de liaison (22) de l'agencement de circuit de drainage et par le déclenchement d'une alerte et la fermeture de la troisième vanne (21) prévue dans la conduite d'air de liaison (22) de l'agencement de circuit de drainage si la pression dans la conduite d'amenée d'air (12) dépasse un seuil prédéterminé lorsque la troisième vanne (21) prévue dans conduite d'air de liaison (22) de l'agencement de circuit de drainage est ouverte.

13. Agencement selon l'une des revendications 6 à 12, **caractérisé**
**par** une chambre de lubrifiant (7) prévue entre un premier anneau d'étanchéité (5) prévu circonférentiellement autour de l'arbre d'hélice (1) et un deuxième anneau d'étanchéité (6) prévu circonférentiellement autour de l'arbre d'hélice (1), dans lequel la chambre de lubrifiant (7) est prévue circonférentiellement autour de l'arbre d'hélice (1).

14. Agencement selon la revendication 13, **caractérisé**
**en ce que** la chambre d'air (8) est prévue entre une garniture d'étanchéité faciale (4) prévue circonférentiellement autour de l'arbre d'hélice (1) et le premier anneau d'étanchéité.

15. Agencement selon la revendication 13 ou 14, **caractérisé**
**par** une conduite d'amenée de lubrifiant (9) configurée pour amener un lubrifiant d'un réservoir de lubrifiant (10) vers la chambre de lubrifiant (7) et par une conduite de retour de lubrifiant (11) configurée pour amener le lubrifiant de la chambre de lubrifiant (7) vers le réservoir de lubrifiant (10).
